# EUROPÄISCHE PATENTSCHRIFT

(11) **EP 1 494 401 B1**
(45) Veröffentlichungstag und Bekanntmachung des Hinweises auf die Patenterteilung: **01.02.2012**
(21) Anmeldenummer: 03026262.0
(22) Anmeldetag: 14.11.2003
(51) Int. Cl.: H04L 12/12, G06F 1/32, H04L 29/06

(54) **Router and Verfahren zur Aktivierung eines deaktivierten Computers**
Router and method of activating a deactivated computer
Routeur et procédé d'activation d'un ordinateur désactivé

(30) Priorität: 03.07.2003 DE 10330079
(43) Veröffentlichungstag der Anmeldung: 05.01.2005
(73) Patentinhaber: Fujitsu Technology Solutions Intellectual Property GmbH, 80807 München (DE)
(72) Erfinder: Horstmeier, Jens, 86343 Königsbrunn (DE); Stieger, Sepp, 86163 Augsburg (DE)
(74) Vertreter: Epping - Hermann - Fischer

(56) Entgegenhaltungen:
- US-A- 5 915 119
- US-A1- 2003 058 843
- US-A1- 2003 121 032
- YAP KEN: "Wake On LAN proxy (readme, wold.c, wolc.pl, wolc.py, sample.dat from wolp-0.5.tar.gz; index of /wolp)" INTERNET PUBLICATION, [Online] 13. April 2003 (2003-04-13), Seiten 1-17, XP002364611 Gefunden im Internet: URL:http://etherboot.sourceforge.net/wolp/ wolp-0.5.tar.gz> [gefunden am 2006-01-26]
- "Magic Packet Technology" WHITE PAPER AMD, 30. November 1995 (1995-11-30), Seiten 1-5, XP002235866
- "Wake Up to Wake-on-LAN" INTERNET CITATION, 31. Dezember 1996 (1996-12-31), XP002235867
- TANENBAUM A S: "COMPUTER NETWORKS, PASSAGE" COMPUTER NETWORKS, ENGLEWOOD CLIFFS, PRENTICE HALL, US, 1993, Seiten 320-350, XP002074195

## Beschreibung

Die Erfindung betrifft einen Router mit einer Vorrichtung zum Versenden eines "Wake-On-LAN"-Paketes in ein angeschlossenes lokales Netzwerk. Die Erfindung betrifft ein Verfahren zur Aktivierung eines deaktivierten Rechners in einem lokalen Netzwerk durch eine Einrichtung, wobei der deaktivierte Rechner über die Einrichtung in dem lokalen Netzwerk eine Verbindung zu einem zweiten Netzwerk aufweist.

Derartige Router sind beispielsweise aus der Us 5,915,119, der US 2003/0121032 oder auch der US 2003/0058843 bekannt.

Bei modernen Computersystemen besteht die Möglichkeit, das Computersystem durch eine "Wake-On-LAN"-Funktion von einem deaktivierten Zustand in einen aktiven Zustand überzuführen. Voraussetzung dabei ist, daß der Computer über eine "Wake-On-LAN" taugliche Netzwerkkarte verfügt. Ein mit einer solchen Funktion ausgerüsteter Rechner kann Bestandteil eines lokalen Netzwerks sein, in dem sich verschiedene, untereinander vernetzte Rechner befinden. Ist die Funktion auf der Netzwerkkarte aktiv, so kann der Rechner heruntergefahren werden, bleibt aber mit dem Stromnetz verbunden. Er wird daher nur deaktiviert und nicht vollständig ausgeschaltet. Die Netzwerkkarte ist weiterhin aktiv und empfängt den Datenverkehr auf dem Netzwerk zwischen den angeschlossenen Rechnern. Empfängt die Netzwerkkarte ein "Wake-On-LAN"-Kommando für diesen Rechner, so aktiviert sie die Mutterplatine des Rechners und startet den Rechner. Dies ist insbesondere dann von Vorteil, wenn Funktionen auf einem Rechner nur temporär benötigt werden und der entsprechende Rechner während der restlichen Zeit abgeschaltet sein kann.

Das "Wake-On-LAN"-Kommando wird von einem weiteren aktiven Rechner innerhalb des lokalen Netzwerks entweder als sogenanntes "Broadcast-Paket", d. h. als allgemeine Sendung an alle Rechner, oder als direktes Paket an den deaktivierten Rechner gesendet. Sind die Rechner im lokalen Netzwerk über einen Router mit dem Internet verbunden, so ist es denkbar, einen innerhalb des lokalen Netzwerks deaktivierten Rechner über einen Computer innerhalb des Internets und den Router aktivieren zu wollen. Dies ist dann notwendig, wenn beispielsweise ein Systemadministrator eine Fernwartung an den Diensten durchführen will, die der Rechner des lokalen Netzwerks bereitstellt.

Bislang gibt es zwei Möglichkeiten, um einen deaktivierten Rechner innerhalb eines lokalen Netzwerks von außerhalb über den Router zu aktivieren. Eine erste Möglichkeit besteht darin, eine sichere Verbindung zu einem zweiten aktiven Rechner innerhalb des lokalen Netzwerks aufzubauen und von diesem aus ein "Wake-On-LAN"-Kommando an den deaktivierten Rechner zu senden. Dabei muß jedoch zumindest ein Rechner innerhalb des lokalen Netzwerks aktiv sein. Zudem stellt diese Methode ein eventuelles Sicherheitsrisiko dar, da die vom Internet in das lokale Netz aufgebaute Verbindung abhörbar ist.

Alternativ hierzu gibt es die Möglichkeit, an den Router, die Schnittstelle zwischen lokalem Netz und dem Internet, ein Kommando zum "Broadcast Forwarding" zu senden. Der Router empfängt dabei das Paket und sendet eine allgemeine Mitteilung in das lokale Netzwerk. Diese Mitteilung beinhaltet die MAC-Adresse der Netzwerkkarte des zu startenden Rechners. Diese Adresse ist eindeutig bei jeder Netzwerkkarte. Die Netzwerkkarte vergleicht die empfangene MAC-Adresse mit ihrer eigenen und aktiviert bei Übereinstimmung den Rechner. Bei dieser Möglichkeit muß allerdings die MAC-Adresse bekannt sein. Auch muß der Router die Funktion des Weiterleitens (Forwarding) eines "Broadcast-Paketes" aktiviert haben. Die Aktivierung einer solchen Funktion stellt jedoch ein Sicherheitsrisiko dar.

Es ist daher Aufgabe der Erfindung, eine Lösung aufzuzeugen, mit dem ein im lokalen Netzwerk deaktivierter Rechner aktivierbar ist.

Diese Aufgabe wird durch einen Router gemäß Anspruch 1 gelöst, bei dem das "Wake-On-LAN"-Paket im Router bereits abgelegt ist, oder der Router eine Vorrichtung zur Generierung eines "Wake-On-LAN"-Paketes aufweist. Damit übernimmt der Router die Generierung des "Wake-On-LAN"-Paketes und sendet es in das lokale Netzwerk. Das Sicherheitsrisiko des Abhörens besteht somit nicht mehr.

Die Aufgabe wird bezüglich des Verfahrens durch das Empfangen eines für den deaktivierten Rechner bestimmten Paketes über das zweite Netzwerk von der Einrichtung und dem Senden eines in der Einrichtung abgelegten oder generierten Paketes von der Einrichtung zur Aktivierung an den deaktivierten Rechner in dem lokalen Netzwerk gemäß Anspruch 3 gelöst.

Dabei wird von dem Router bzw. der Einrichtung ein "Wake-On-LAN"-Paket in das lokale Netzwerk gesandt. Die Netzwerkkarte des deaktivierten Rechners empfängt das für den Rechner bestimmte Paket und aktiviert den Rechner.

Ausgestaltungen der Erfindung ergeben sich aus den Unteransprüchen. So ist es zweckmäßig, wenn die Einrichtung zur Generierung und zum Versenden des Paketes Bestandteil eines Betriebssystems des Routers ist.

Das erfindungsgemäße Verfahren kann vorteilhaft durch eine Weiterleitung des von der Vorrichtung empfangenen Paketes nach Aktivierung des Rechners weitergebildet werden. Eine weitere vorteilhafte Ausgestaltung des Verfahrens ist die Ausbildung der Einrichtung als Router. Alternativ kann die Einrichtung auch als "Firewall" zum Schutz gegen Angriffe oder unberechtigtes Eindringen in das lokale Netz ausgebildet sein.

Besonders vorteilhaft ist es, wenn ein "Wake-On-LAN"-Paket immer dann gesendet wird, wenn das empfangene Paket einen Dienst anfordert und der den Dienst bereitstellende Rechner deaktiviert ist. Somit wird auf Anforderung der deaktivierte Rechner gestartet und der angeforderte Dienst bereitgestellt.

Im Folgenden soll die Erfindung anhand eines Ausführungsbeispiels unter Bezugnahme auf die Zeichnungen im Detail erläutert werden. Es zeigen:
- Figur 1: ein Ausführungsbeispiel der Erfindung,
- Figur 2: ein Verfahrensbeispiel.

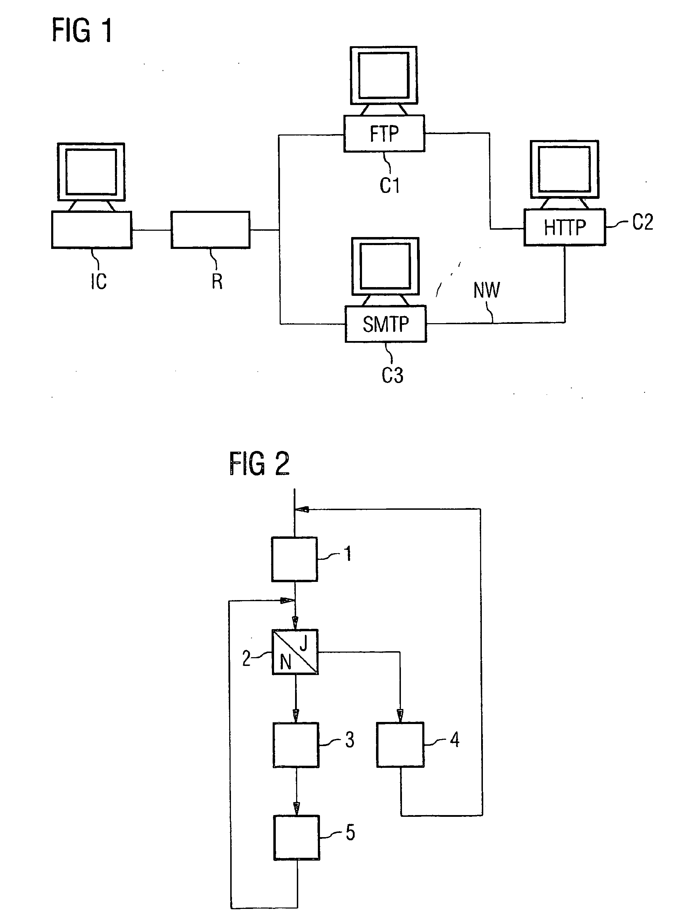

Figur 1 zeigt ein lokales Netzwerk NW mit drei sich darin befindlichen Rechnern C1, C2 und C3 sowie einem Router R. Des weiteren ist der Router R über eine physikalische Leitung mit einem Rechner IC verbunden. Dieser Rechner und die Leitung ist Teil des hier nicht gezeigten Internets, also ein Rechner, der eine temporäre oder stationäre IP-Adresse besitzt. Im Folgenden wird er als externer Rechner bezeichnet.

Die drei Rechner C1, C2 und C3 des lokalen Netzwerks NW weisen hier nicht gezeigte Netzwerkkarten auf, die eine eindeutige MAC-Adresse besitzen und "Wake-On-LAN"-Funktionalität aufweisen. Auf den drei Rechnern ist jeweils ein sogenannter Dienst gestartet. Dieser ist ausgedrückt durch sein jeweiliges Protokoll. Auf dem Rechner C1 läuft das FTP-Protokoll (File Transfer Protocol), der Rechner C2 ist für das HTTP-Protokoll (Hyper Text Transfer Protocol) zuständig, und der Rechner C3 enthält das SMTP-Protokoll (Simple Mail Transfer Protocol). Die drei Rechner können untereinander und über den Router mit externen Rechnern Daten austauschen.

Der externe Rechner IC fordert nun einen dieser drei Dienste an. Dazu sendet er ein TCP/IP-Paket an den Router R mit der Aufforderung an den entsprechenden Dienst. Der Router R analysiert diese Anforderung, entnimmt aus einer gezeigten Tabelle die MAC- oder IP-Adresse des Rechners, der den angeforderten Dienst aufweist und übersetzt die Anfrage in die Adressierung des lokalen Netzes. Die Anforderung wird dann vom Router an die Adresse des Zielrechners innerhalb des lokalen Netzwerks weitergeleitet. Der Zielrechner verarbeitet die Anforderung und sendet eine Antwort zurück, die vom Router erneut übersetzt und zurück an den externen Rechner geschickt wird.

Im Folgenden soll nun der Rechner, der den geforderten Dienst aufweist, deaktiviert sein. Ein mögliches Verfahrensbeispiel, in dem der Router den deaktivierten Rechner nach einer Anforderung eines Dienstes reaktiviert, zeigt Figur 2. Nach einer externen Anforderung an den Router im Schritt 1 überprüft dieser in Schritt 2, ob der Rechner, der den geforderten Dienst bereitstellt, aktiv ist oder nicht. Dies erfolgt meist durch eine Tabelle, in der der Router die MAC- bzw. IP-Adressen der aktiven Rechner im lokalen Netz abgelegt hat. In dieser Tabelle steht auch, welche Anfrage für einen Dienst an welchen Rechner weitergeleitet werden soll.

Ist der Rechner, dessen dienst beansprucht wird aktiv, wird die Anfrage übersetzt, mit einer lokalen Zieladresse versehen und an den entsprechenden Rechner im Schritt 4 weitergeleitet. Ist der Rechner nicht aktiv, so wird in Schritt 3 ein "Wake-On-LAN"-Paket vom Router generiert. Dieses Paket enthält einen Synchronisations-Datenstrom mit 6 Bytes der hexdezimalen Folge FF, gefolgt von 16 Wiederholungen der MAC-Adresse des Zielrechners. Dieses Paket wird als "Broadcast"-Paket in das lokale Netzwerk gesendet. Nach einer gewissen Wartezeit 5, um dem aktivierten Rechner Zeit zu geben, den Dienst zu starten, wird eine erneute Anfrage, ob der Rechner aktiv ist, durchgeführt. Ist der Rechner nun aktiv und der Dienst gestartet, wird die Anforderung an den Zielrechner weitergeleitet. Ansonsten wird der Vorgang wiederholt.

Somit muß nicht mehr von einem externen Rechner ein "Wake-On-LAN"-Paket erstellt und an den Router gesendet werden, sondern der Router übernimmt die Generierung und die Versendung des Paketes an den richtigen Rechner. Dies hat den Vorteil, daß der externe Rechner den Aufbau des lokalen Netzwerks nicht kennen muß. Somit entfallen spezielle Kenntnisse über MAC-Adressen der lokalen Rechner wie auch Kenntnisse über Broadcast-Forwarding. Die potentielle Sicherheitslücke wird geschlossen, da ein externe Rechner ganz normal über die IP-Adresse des Routers einen Dienst anfordert und der Router mittels des angeforderten Dienstes die lokale Zieladresse ermittelt. Der Router übernimmt auch das Aktivieren des Rechners.

Neben einem durch den Router generierten Broadcast-Paket, daß die MAC-Adresse des zu aktivierenden Rechners enthält, kann bei einer festen IP-Adresse innerhalb des lokalen Netzes NW diese direkt angegeben werden. Somit kann sowohl bei dynamischer Vergabe als auch bei fester Zuweisung der IP-Adressen innerhalb des Netzwerks eine "Wake-On-LAN"-Funktion durch den Router ausgeführt werden. Das entsprechende "Wake-On-LAN"-Paket wird immer dann gesendet, wenn der den Dienst bereitstellende Rechner deaktiviert ist. Neben einem Router ist es möglich, das Verfahren auch mit einer Firewall durchzuführen. Damit lassen sich zusätzlich auch einzelne externe IP-Adressen benennen, die die Erlaubnis für die "Wake-On-LAN"-Funktion haben und so die Sicherheit noch weiter erhöhen.

## Patentansprüche

1. Router (R) mit
- einer Vorrichtung zum Versenden eines "Wake-On-LAN"-Paketes in ein angeschlossenes erstes lokales Netzwerk (NW), wobei das "Wake-On-LAN"-Paket im Router (R) bereits abgelegt ist, oder der Router (R) eine Vorrichtung zur Generierung eines "Wake-On-LAN"-Paketes aufweist,
wobei
- das erste lokale Netzwerk (NW) wenigstens einen Computer (C1, C2, C3) aufweist, der für eine Verarbeitung einer Anforderung an einen durch ein Protokoll ausgedrückten Dienst zuständig ist und;
- der Router (R) zum Empfang eines die Anfrage für den Dienst enthaltenden TCP/IP-Paketes von einem externen Rechner (IC) und zur Weiterleitung des TCP/IP-Paketes, nach Aktivierung des Computers (C1) durch das "Wake-On-LAN"-Paket, an den Computer (C1) in dem angeschlossenen lokalen Netzwerk (NW) ausgebildet ist, wobei der Router (R) überprüft, ob der Computer (C1) aktiviert ist.

2. Router nach Anspruch 1;
**dadurch gekennzeichnet, daß**
die Vorrichtung zur Generierung und zum Versenden des "Wake-On-LAN"-Paketes Teil eines Betriebssystems des Routers (R) ist.

3. Verfahren zur Aktivierung eines deaktivierten Computers (C1, C2, C3) in einem lokalen Netzwerk (NW) durch eine Einrichtung (R), wobei der deaktivierte Computer über die Einrichtung (R) in dem lokalen Netzwerk eine Verbindung zu einem zweiten Netzwerk aufweist, und der deaktivierte Computer für eine Verarbeitung einer Anforderung an einen durch ein Protokoll ausgedrückten Dienst zuständig ist;
umfassend:
- ein Empfangen eines für den deaktivierten Computer bestimmten und von einem externen Rechner (IC) über das zweite Netzwerk gesandten TCP/IP Paketes mit der Anforderung für den durch das Protokoll ausgedrückten Dienst von der Einrichtung (R);
- ein Senden eines in der Einrichtung (R) abgelegten oder von der Einrichtung (R) generierten Paketes zur Aktivierung an den deaktivierten Computer (C1, C2, C3) in dem lokalen Netzwerk von der Einrichtung (R);
- ein Überprüfen, ob der Computer in dem lokalen Netzwerk aktiv ist;
- ein Weiterleiten des von der Einrichtung (R) empfangenen TCP/IP Paketes für den Dienst nach Aktivierung des Computers (C1, C2, C3);
- Verarbeiten der im TCP/IP Paket enthaltenen Anforderung und Senden der Antwort an die Einrichtung (R);
- Übersetzen der Antwort und Senden an den externen Rechner (IC) durch die Einrichtung (R).

4. Verfahren nach Anspruch 3,
**dadurch gekennzeichnet, daß**
die Einrichtung (R) als Router ausgebildet ist.

5. Verfahren nach einem der Ansprüche 3 bis 4,
**dadurch gekennzeichnet, daß**
die Einrichtung (R) als "Firewall" ausgebildet ist.

6. Verfahren nach einem der Ansprüche 3 bis 5,
**dadurch gekennzeichnet, daß**
ein Paket zum Aktivieren an den Computer nur dann gesendet wird, wenn das empfangene Paket einen Dienst anfordert und der den Dienst bereitstellende Rechner deaktiviert ist.

7. Verfahren nach einem der Ansprüche 3 bis 6,
**dadurch gekennzeichnet, daß**
das zweite Netzwerk das Internet ist und das empfangene Paket von einem Rechner, der mit dem Internet verbunden ist, gesendet wurde.

## Claims

1. Router (R) having
- a device for sending a "Wake On LAN" packet to a connected first local area network (NW),
the "Wake On LAN" packet having already been stored in the router (R) or the router (R) having a device for generating a "Wake On LAN" packet,
- the first local area network (NW) having at least one computer (C1, C2, C3) which is responsible for processing a request for a service expressed by a protocol; and
- the router (R) being designed to receive a TCP/IP packet containing the request for the service from an external computer (IC) and to forward the TCP/IP packet, after the computer (C1) has been activated by the "Wake On LAN" packet, to the computer (C1) in the connected local area network (NW), the router (R) checking whether the computer (C1) has been activated.

2. Router according to Claim 1,
**characterized in that**
the device for generating and sending the "Wake On LAN" packet is part of an operating system for the router (R).

3. Method for activating a deactivated computer (C1, C2, C3) in a local area network (NW) by means of a device (R), with the deactivated computer having a connection to a second network by way of the device (R) in the local area network, and the deactivated computer being responsible for processing a request for a service expressed by a protocol;
said method comprising the following steps:
- the device (R) receives a TCP/IP packet which is intended for the deactivated computer, is transmitted from an external computer (IC) via the second network and contains the request for the service expressed by the protocol;
- the device (R) transmits an activation packet, which is stored in the device (R) or is generated by the device (R), to the deactivated computer (C1, C2, C3) in the local area network;
- a check is carried out in order to determine whether the computer in the local area network is active;
- the TCP/IP packet for the service, which is received by the device (R), is forwarded after the computer (C1, C2, C3) has been activated;
- the request contained in the TCP/IP packet is processed and the response is transmitted to the device (R);
- the device (R) translates the response and transmits it to the external computer (IC).

4. Method according to Claim 3,
**characterized in that**
the device (R) is in the form of a router.

5. Method according to one of Claims 3 to 4,
**characterized in that**
the device (R) is in the form of a "firewall".

6. Method according to one of Claims 3 to 5,
**characterized in that**
a packet for activation purposes is transmitted to the computer only when the received packet requests a service and the computer providing the service is in the deactivated state.

7. Method according to one of Claims 3 to 6,
**characterized in that**
the second network is the Internet and the received packet was transmitted by a computer which is connected to the Internet.

## Revendications

1. Routeur (R) avec
- un dispositif pour l'expédition d'un paquet "Wake-On-Lan" dans un premier réseau local (NW) raccordé, dans lequel le paquet "Wake-On-Lan" est déjà déposé dans le routeur (R), ou dans lequel le routeur (R) comporte un dispositif pour la génération d'un paquet "Wake-On-Lan",
dans lequel
- le premier réseau local (NW) comporte au moins un ordinateur (C1, C2, C3) chargé du traitement d'une requête de service exprimée par un protocole et ;
- le routeur (R) est développé pour la réception d'un paquet TCP/IP contenant la demande de service provenant d'un calculateur externe (IC) et pour le routage du paquet TCP/IP vers l'ordinateur (C1) dans le réseau local (NW) raccordé, après activation de l'ordinateur (C1) par le paquet "Wake-On-Lan", le routeur (R) vérifiant si l'ordinateur (C1) est activé.

2. Routeur selon la revendication 1,
**caractérisé en ce que** le dispositif pour la génération et pour l'expédition du paquet "Wake-On-Lan" fait partie d'un système d'exploitation du routeur (R).

3. Procédé pour l'activation d'un ordinateur désactivé (C1, C2, C3) dans un réseau local (NW) au moyen d'un dispositif (R), dans lequel l'ordinateur désactivé comporte une liaison vers un deuxième réseau par l'intermédiaire du dispositif (R) du réseau local, et dans lequel l'ordinateur désactivé est chargé du traitement d'une requête de service exprimée par un protocole,
comprenant :
- une réception par le dispositif (R) d'un paquet TCP/IP destiné à l'ordinateur désactivé et expédié par un calculateur externe (IC) par l'intermédiaire du deuxième réseau local avec la requête de service exprimée par le protocole ;
- une expédition par le dispositif (R) d'un paquet déposé dans le dispositif (R) ou généré par le dispositif (R) vers l'ordinateur désactivé (C1, C2, C3) dans le réseau local pour son activation ;
- une vérification si l'ordinateur du réseau local est actif ;
- un routage du paquet TCP/IP reçu par le dispositif (R) pour le service après activation de l'ordinateur (C1, C2, C3) ;
- le traitement de la requête contenue dans le paquet TCP/IP et l'expédition de la réponse vers le dispositif (R) ;
- la traduction de la réponse et l'expédition par le dispositif (R) vers le calculateur externe (IC).

4. Procédé selon la revendication 3,
**caractérisé en ce que** le dispositif (R) est développé sous la forme d'un routeur.

5. Procédé selon une des revendications 3 à 4,
**caractérisé en ce que** le dispositif (R) est développé sous la forme d' un "Firewall".

6. Procédé selon une des revendications 3 à 5,
**caractérisé en ce qu'**on expédie un paquet d'activation vers l'ordinateur uniquement lorsque le paquet reçu requiert un service et que le calculateur fournissant le service est désactivé.

7. Procédé selon une des revendications 3 à 6,
**caractérisé en ce que** le deuxième réseau est l'internet et que le paquet reçu a été expédié par un calculateur relié à internet.
